# EUROPEAN PATENT APPLICATION

(11) **EP 2 104 322 A1**
(43) Date of publication of application: **23.09.2009**
(21) Application number: 08005000.8
(22) Date of filing: 18.03.2008
(51) Int. Cl.: H04M 1/253

(54) **Communication system for voice-over internet protocol using license-free frequencies**

(71) Applicant: BlueTown ApS, 2730 Herlev (DK)
(72) Inventor: Kristensen, Johnny, 2830 Virum (DK)
(74) Representative: Tonnesen, Bo

(57) **Abstract**

In a communication system comprising
- at least one handset (1) having a microphone (2), a loudspeaker (3), a keyboard (4) , and Bluetooth capability,
- at least one Bluetooth access point (6) providing an internet connection,
- at least one internet-connected VOIP server (8) providing call connections in the form of PSTN, GSM, VOIP, etc., there is provided a software-implemented client (11,12,13,18) functioning as a call centre and controlling outgoing and incoming communications to be directed via the Bluetooth connection (5) between the handset (1) and the Bluetooth access point (6) and via the internet (7) to and from the VOIP server (8) controlling the call connections.

This provides the possibility of making calls at a reduced price or even free.

## Description

### Technical Field

The present invention relates to a communication system, which provides low-cost communication via the internet whenever an internet connection is available.

### Background Art

In communication systems of this kind it is known to provide voice-over internet protocol connections using WiFi hotspots, intemet-connected computers, etc. One example of such a system is the well-known Skype® concept, which, however, requires that both ends of the call to be set up comprises intemet-connected PC's. In an alternative, the one end connection is provided using the so-called SkypeOut®, i.e. providing local connection to an ordinary PSTN telephone or GSM mobile telephone.

### Disclosure of the Invention

Based on this prior art, it is the object of the present invention to provide a communication system which can be implemented in a mobile telephone, a DECT telephone, a PDA or similar handset, said handset having Bluetooth capability, without necessarily having a PC connected to the internet associated with the handset, and yet establishes a user-friendly system only requiring the presence of a Bluetooth internet access point, be it a private or public hotspot, and automatically providing low cost or free communication from the handset to the desired destination. This object is achieved with a communication system of said kind, which according to the present invention comprises the features set forth in claim 1. With this arrangement the communication to and from the handset is controlled by the software-implemented client in such a way that the user does not have to interfere with the function in order to obtain a connection to the desired destination, and the communication is set up using license-free frequencies, such as Bluetooth, without any costs related to the GSM function of the mobile phone, if the handset is a mobile phone.

If the handset is a mobile phone having Symbian or other non-proprietary, e.g. Windows mobile, platforms, the software-implemented client may be installed in the handset. If, however, the handset is an older type of mobile phone running proprietary software, the major part of the software-implemented client may have to be installed in the Bluetooth access point, and only a minor part of the software-implemented client is installed in the handset using JAVA or similar.

It is preferred that the handset is a cell phone, however also DECT phones may be used in accordance with the present invention.

### Brief Description of the Drawings

In the following detailed part of the present description, the invention will be explained in more detail with reference to the exemplary embodiments of a communication system in accordance with the invention shown in the drawings, in which
Fig. 1 schematically shows a communication system in accordance with the present invention,
Fig. 2 schematically shows the provision of a communication connection in accordance with a first aspect of the invention using a JAVA client in the handset and a Bluetooth access point with built-in voice-over internet protocol client, a Bluetooth headset is used for audio.
Fig. 3 schematically shows the provision of a communication connection in accordance with a second aspect of the invention using a Symbian VOIP client in the handset and a simple Bluetooth internet access point,
Fig. 4 schematically shows the provision of a communication connection in a situation where no Bluetooth access point is available and where a call-back function in the VOIP server provides a low cost GSM connection between the handset and the VOIP server and further on to the desired destination, and
Fig. 5 schematically shows an overall view of a communication system implementing a number of the possible connection possibilities provided by the present invention.

### Description of the preferred embodiments

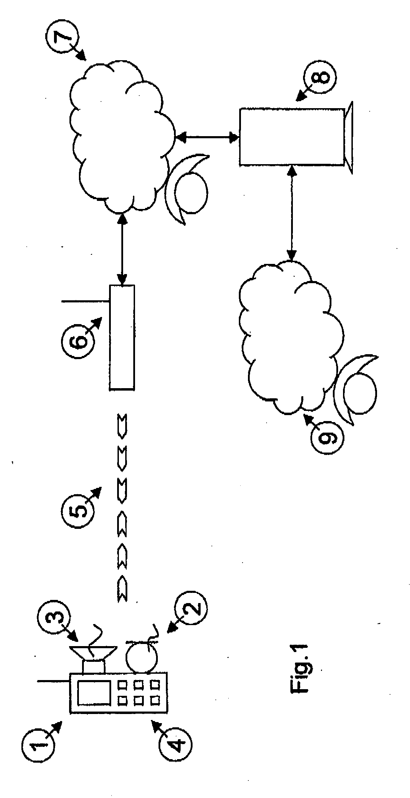

The communication system schematically shown in Fig. 1 comprises a handset 1 including a microphone 2, a loudspeaker 3, a keyboard 4 and a Bluetooth connection system 5, said handset 1 being connectable to a Bluetooth access point 6 providing internet connection 7 for the handset 1. In order to provide a connection further on to the destination, a voice-over internet protocol server 8 is provided in the internet, said server function to connect the handset 1 to the desired destination.

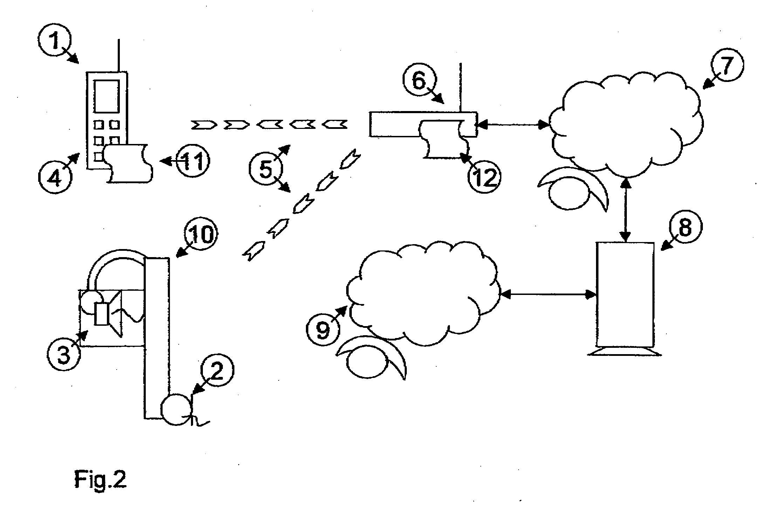

In Fig. 2 the communication setup for an older type of mobile phone 1 running proprietary software is shown schematically. The mobile phone is provided with a JAVA software client 11, which is installed in the mobile phone 1 in the traditional way, either by downloading directly from a service provider or by transferring from a personal computer. The installed software client 11 establishes a connection 5 to the Bluetooth access point 6, whereby data can be transferred between the mobile phone 1 and the access point 6. The software client 11 in the mobile phone 1 provides a remote control of the functions in the access point 6, said access point having a built-in VOIP client 12, which is able to provide a connection to a VOIP server 8 via the internet 7. When making a call from the mobile phone 1, the software 11 in the mobile phone 1 sends data to the access point 6 via the Bluetooth connection 5 in order to make the built-in VOIP client 12 call the desired destination via the internet 7 and the VOIP server 8. The VOIP server 8 is connected to the public-switched telephone network (PSTN) 9, whereby the mobile phone 1 is able to call any ordinary telephone and any such ordinary telephone is able to call the mobile phone 1. As soon as a connection is established between the mobile phone 1 and the desired destination, a Bluetooth audio connection 5 is provided between the access point 6 and a Bluetooth headset 10, and the data connection 5 between the mobile phone 1 and the access point 6 remains open in order to be able to send SMS or other data-based information between the mobile phone 1 and the access point 6 and the internet 7.

Because of the limited functionality of the mobile java, and capacity of older handsets 1, the entire VOIP functionality will be located in the access point 6. The functionality of the Java client 11 will be of remote controlling the access point 6. It is at present not possible to control the audio devices of the handset 1 through java, and therefore the end-user will have to use a Bluetooth headset 10 for the audio communication.

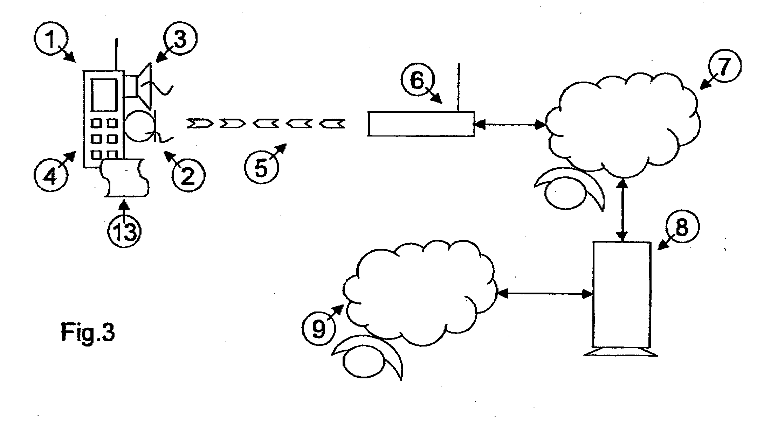

In Fig. 3 a corresponding situation as shown in Fig. 2 is shown, however, the mobile phone 1 runs a non-proprietary OS system and thus the software client 13 providing VOIP is completely installed in the mobile phone 1 and the Bluetooth access point 6 does not need to have any part of the software client installed and will only function as an access point without any functionality relating to the provision of the VOIP connection. The software client 13 installed in the mobile phone 1 provides a connection to the Bluetooth access point 6 and the mobile phone receives a IP address via the Bluetooth connection. Via this IP address the software provides a connection to a VOIP server 8 via the internet 7 and this server 8 is connected to the public-switched telephone network 9 (PSTN), whereby the mobile phone 1 is able to call any ordinary telephone and any ordinary telephone is able to call the mobile phone 1.

As soon as a connection is established between the mobile phone 1 and the VOIP server 8, call-connectivity is provided between the mobile phone 1 and the PSTN 9.

In a situation, in which no Blustooth connection 6 is available for the handset, the handset may, when provided with a SIM card to a standard GSM network 16, send an SMS or GPRS request 14 to an intemet-based server 17, said server 17, based on the SMS/GPRS data 14 received, providing a call to the desired destination 15 and a call-back to the handset 1, thus providing a connection between the destination 15 and the handset 1 at a reduced price.

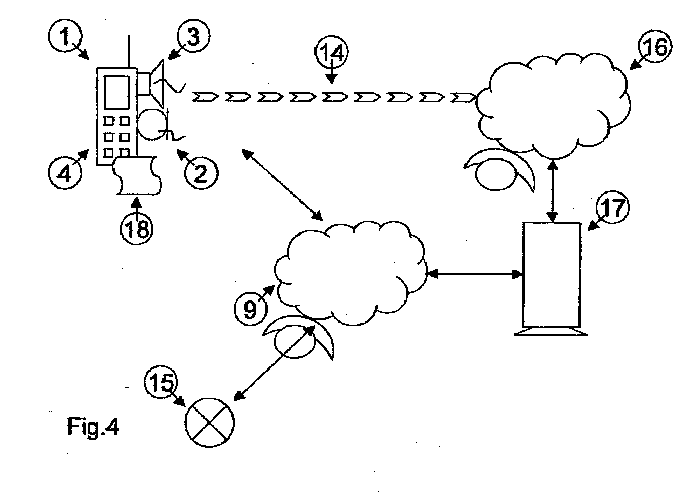

As shown in Fig. 4, this situation is handled by the mobile phone 1 sending, using the GSM network 16, an SMS or GPRS request 14 to the intemet-based server 17, and based on the information in this request the internet server 17 provides a connection to the destination 15 and a call-back to the mobile phone 1, whereby a connection is established between the destination and the mobile phone, possibly at a reduced price due to a special low-price for the GSM connection between the server 17 and the mobile phone 1.

When negotiating terms and prices with a GSM carrier, it is usually possible to negotiate a special low cost structure so it will be possible to communicate at a lower price between own subscriptions, i.e. fixed to cell, or cell to fixed. By using this low cost model, it will be possible to open a low cost call-back line, and use this to dial through the VOIP server.

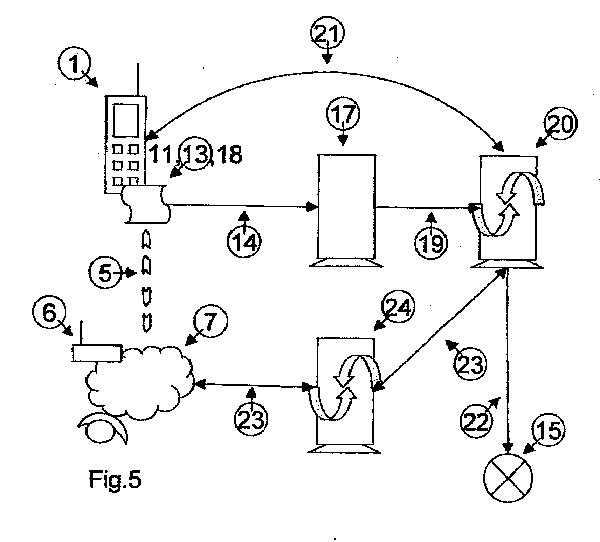

In Fig. 5 a more complete system has been indicated schematically in order to give an overview of the total system providing the communication system in accordance with the present invention. This system comprises the mobile telephone 1, which may be connected to the Bluetooth access point 6 providing an internet connection to the VOIP server 24 providing the connections further on to the public-switched telephone network 22 via a PSTN gateway 20. If the connection to the Bluetooth access point 6 is not available for the mobile telephone 1, the client 11, 13, 18 installed in the mobile telephone 1 sends an SMS or GPRS request 14 to a call-back server 17, which requests the PSTN gateway 20 to call the destination 15 and call back to the mobile phone 1 at a reduced price.

## Claims

1. A communication system comprising
- at least one handset (1) having a microphone (2), a loudspeaker (3), a keyboard (4), and Bluetooth capability,
- at least one Bluetooth access point (6) providing an internet connection,
- at least one internet-connected VOIP server (8) providing call connections in the form of PSTN, GSM, VOIP, etc.,
a software-implemented client (11,12,13,18) functioning as a call centre and controlling outgoing and incoming communications to be directed via the Bluetooth connection (5) between the handset (1) and the Bluetooth access point (6) and via the internet (7) to and from the VOIP server (8) controlling the call connections.

2. Communication system in accordance with claim 1, wherein the handset (1) has Symbian or other non-proprietary OS, which is able to handle the software-implemented client, and wherein the software-implemented client (13,18) is installed in the handset.

3. Communication system in accordance with claim 1, wherein the handset (1) has a proprietary software, and wherein the major part of the software-implemented client (12) is installed in the Bluetooth access point (6), and a minor part (11) is installed in the handset (1), using JAVA or similar.

4. Communication system in accordance with any of the preceding claims, **characterised in that** the handset (1) is a cell phone.

5. Communication system in accordance with any of the preceding claims 1-3, **characterised In that** the handset (1) is a DECT phone.

6. Communication system in accordance with claim 2, **characterised by** the software-implemented client (13,18) comprising a module for detecting the presence of a Bluetooth internet connection (5,6) and upon detection thereof to direct calls via this Bluetooth connection (5,6).

7. Communication system in accordance with claim 6, **characterised by** the software-implemented client (13,18) comprising a module for registering the internet address of the handset (1) in order to open the possibility of receiving calls via voice-over internet protocol.

8. Communication system in accordance with any of the preceding claims, **characterised by** the VOIP server (17) comprising a call-back module for providing a call-back cell GSM connection when no Bluetooth access (6) is present, the call-back cell connection being provided by a request (14) sent by the client in the form of a SMS message or GPRS command to the VOIP server (17), said call-back cell connection being at a lower cost than the normal cell connection for the cell phone (1).
